# FASCICULE DE BREVET EUROPEEN

(11) **EP 3 632 574 B1**
(45) Date de publication et mention de la délivrance du brevet: **20.03.2024**
(21) Numéro de dépôt: 19200552.8
(22) Date de dépôt: 30.09.2019
(51) Int. Cl.: B05B 5/03, B05B 7/14, B05B 5/16, B05B 15/55, B05B 15/555, B05B 15/72

(54) **SYSTÈME DE POUDRAGE**
PULVERBESCHICHTUNGSSYSTEM
POWDERING SYSTEM

(30) Priorité: 01.10.2018 FR 1859057; 01.10.2018 FR 1859056
(43) Date de publication de la demande: 08.04.2020
(73) Titulaire: Exel Industries, 51200 Epernay (FR)
(72) Inventeur: BROCHIER, Hervé, 38190 FROGES (FR); SERPILLON, Jean-Christophe, 38970 QUET EN BEAUMONT (FR); FOSSACECA, Michel, 38410 VAULNAVEYS-LE-HAUT (FR); GHIO, Eric, 38800 CHAMPAGNIER (FR)
(74) Mandataire: Lavoix

(56) Documents cités:
- WO-A1-2011/128288
- WO-A1-2017/186355
- DE-A1-102014 003 373

## Description

La présente invention concerne un système de poudrage.

L'invention se rapporte au domaine du poudrage, par exemple du poudrage électrostatique, qui comprend d'appliquer de la poudre sur un objet par projection de cette poudre, afin de revêtir cet objet avec ladite poudre.

EP 2 588 244 B1 décrit un système de poudrage électrostatique comprenant un réservoir de poudre et des projecteurs de poudre conçus pour revêtir un objet, avec de la poudre issue du réservoir, en projetant ladite poudre sur l'objet. La poudre mise en oeuvre est destinée à donner une couleur à l'objet revêtu. Chaque projecteur de poudre comprend une ligne d'alimentation respective, qui relie le projecteur au réservoir, la ligne comprenant une pompe pour extraire la poudre du réservoir et la projeter. Dans le réservoir, la poudre est mise dans un état fluidisé grâce à une plaque de fluidisation, qui est poreuse et située en partie inférieure du réservoir. Le réservoir comprend une entrée de poudre neuve pour son remplissage. Lors de la projection de la poudre, une partie conséquente de la poudre n'est pas déposée sur l'objet à revêtir. Cette poudre est récupérée et réintroduite dans le réservoir par une deuxième entrée de poudre. Les deux entrées de poudre sont situées sur une paroi latérale verticale du réservoir, à proximité du fond. Dans la même paroi latérale, vers le haut, le réservoir comprend également une sortie d'air fluidisé.

Lors d'un changement de couleur de poudre, il est nécessaire de s'assurer que le réservoir est nettoyé de la poudre précédente susceptible de subsister dans le réservoir. Pour cela, on injecte de l'air comprimé dans le réservoir par les entrées de poudre, la poudre étant évacuée hors du réservoir via la sortie d'air fluidisé, en décrivant une trajectoire en rouleau d'air, grâce à la disposition des entrées et de la sortie.

Toutefois, l'efficacité du nettoyage n'est pas toujours optimale, de la poudre résiduelle pouvant rester piégée dans certains recoins du réservoir. Le débit d'air de nettoyage est généralement limité par la section de passage de la sortie d'air fluidisé, qui, le plus souvent, n'est pas prévue pour l'évacuation d'une quantité importante de poudre résiduelle. Toutefois, une modification de la sortie d'air fluidisé dans le but d'améliorer la fonction de nettoyage peut s'avérer malaisée, puisque la sortie d'air fluidisé doit toujours pouvoir assurer convenablement l'évacuation de l'air fluidisé, ce qui est sa fonction première. WO 2017/186355 A1 décrit un système de poudrage selon l'état de la technique.

C'est aux inconvénients susmentionnés qu'entend en particulier remédier l'invention, en proposant un nouveau système de poudrage dont le nettoyage est plus efficace.

A cet effet, l'invention a pour objet un système de poudrage, présentant une configuration de travail et une configuration de nettoyage et comprenant :
- un réservoir de poudre, comprenant une chambre d'alimentation recevant de la poudre ;
- au moins un projecteur, comprenant :
   ∘ un applicateur de poudre, et
   ∘ une ligne d'alimentation, reliant l'applicateur de poudre à une sortie d'alimentation respective de la chambre d'alimentation, de sorte que, en configuration de travail, l'applicateur de poudre est alimenté avec de la poudre contenue dans la chambre d'alimentation par l'intermédiaire de la ligne d'alimentation ; et
- au moins une entrée de nettoyage, fluidiquement connectée à la chambre d'alimentation de sorte que, en configuration de nettoyage, une source d'alimentation en air de nettoyage peut être connectée à l'entrée de nettoyage pour mettre en circulation de l'air de nettoyage dans la chambre d'alimentation ;

Selon l'invention, le réservoir de poudre comprend :
- une ouverture d'évacuation, ménagée au travers d'une paroi de la chambre d'alimentation et débouchant dans la chambre d'alimentation ; et
- une bonde mobile, qui est mobile entre :
   ∘ une position d'obturation de l'ouverture d'évacuation, adoptée en configuration de travail, et
   ∘ une position d'ouverture de l'ouverture d'évacuation, adoptée en configuration de nettoyage de sorte que la mise en circulation d'air de nettoyage dans la chambre d'alimentation par l'entrée de nettoyage entraîne une évacuation de poudre résiduelle contenue dans la chambre d'alimentation au travers de l'ouverture d'évacuation, vers l'extérieur de la chambre d'alimentation.

Une idée à la base de l'invention est de prévoir une ouverture dédiée à l'évacuation de la poudre résiduelle, ici l'ouverture d'évacuation. En d'autres termes, la seule fonction de l'ouverture d'évacuation est une fonction de nettoyage de la chambre d'alimentation, contrairement à l'art antérieur où, pour le nettoyage, on utilise une sortie déjà existante, et qui n'est donc pas nécessairement adaptée à cette deuxième fonction. L'invention a notamment pour avantage de permettre de prévoir que l'ouverture d'évacuation présente une section de passage relativement élevée, de sorte à être capable d'évacuer une quantité importante de poudre résiduelle et/ou d'autoriser un débit d'air de nettoyage important. On peut alors avantageusement connecter un conduit d'évacuation de poudre résiduelle et d'air de nettoyage de section relativement élevée. De plus, on peut facilement concevoir l'ouverture de nettoyage pour qu'elle admette des équipements complémentaires en lien avec le nettoyage, par exemple des buses de nettoyage, alors que d'autres ouvertures ayant une autre fonction ne pourraient pas nécessairement recevoir de tels équipements complémentaires.

En position d'obturation, la bonde permet de fermer efficacement l'ouverture d'évacuation pour que, en configuration de travail, la chambre d'alimentation soit étanche à l'air et à la poudre. Pour passer en configuration de nettoyage, il est aisé de mouvoir la bonde jusqu'à sa position d'ouverture. Par ailleurs, grâce à la bonde, on peut facilement concevoir l'ouverture d'évacuation de sorte que ladite ouverture d'évacuation définisse une section de passage dont la superficie est élevée, améliorant ainsi l'évacuation de l'air de nettoyage et la poudre résiduelle hors de la chambre d'alimentation.

Des aspects avantageux mais non obligatoires de l'invention sont définis ci-dessous :
- l'ouverture d'évacuation définit une section de passage d'air de nettoyage.
- chaque entrée de nettoyage définit une section de passage d'air de nettoyage.
- l'aire de la section de passage de l'ouverture d'évacuation est supérieure, de préférence au moins deux fois supérieure, à la somme des aires des sections de passage des entrées de nettoyage.
- ladite au moins une entrée de nettoyage comprend au moins une buse de nettoyage fixe, disposée à l'ouverture d'évacuation en étant fixe par rapport à la paroi, ladite au moins une buse de nettoyage fixe étant conçue pour souffler de l'air de nettoyage en provenance de la source d'alimentation depuis l'extérieur de la chambre d'alimentation, en direction de l'intérieur de la chambre d'alimentation, au travers de l'ouverture d'évacuation.
- ladite au moins une entrée de nettoyage comprend au moins une buse de nettoyage mobile, attachée à la bonde mobile de façon à être solidairement mobile avec ladite bonde mobile, ladite au moins une buse de nettoyage mobile étant conçue pour souffler de l'air de nettoyage en direction de l'intérieur de la chambre d'alimentation, au travers de l'ouverture d'évacuation.
- de la position d'obturation à la position d'ouverture, la bonde mobile est déplacée vers l'intérieur de la chambre d'alimentation.
- dans la position d'obturation, la bonde mobile est interposée entre chaque buse de nettoyage mobile et l'intérieur de la chambre d'alimentation.
- en position d'ouverture de la bonde mobile, chaque buse de nettoyage mobile est au moins partiellement positionnée à l'intérieur de la chambre d'alimentation.
- la paroi est une paroi verticale du réservoir de poudre.
- le système de poudrage comprend en outre un système d'aspiration auquel l'ouverture d'évacuation est fluidiquement connectée, pour ainsi évacuer de la poudre résiduelle contenue dans la chambre d'alimentation vers le système d'aspiration, au travers de l'ouverture d'évacuation, lorsque, en configuration de nettoyage, de l'air de nettoyage est mis en circulation dans la chambre d'alimentation par ladite au moins une entrée de nettoyage.
- le réservoir de poudre comprend un actionneur automatique, positionnant automatiquement la bonde mobile en position d'obturation, lorsque le système de poudrage est en configuration de travail, et en position d'ouverture, lorsque le système de poudrage est en configuration de nettoyage.
- le réservoir de poudre comprend :
   ∘ une plaque de fluidisation, délimitant la chambre d'alimentation, la plaque de fluidisation émettant, en configuration de travail, de l'air de fluidisation de la poudre contenue dans la chambre d'alimentation ; et
   ∘ au moins une sortie d'air fluidisé ménagée au travers de la paroi, qui est configurée pour l'évacuation d'air de fluidisation en configuration de travail, au moins l'une des entrées de nettoyage équipant ladite au moins une sortie d'air fluidisé pour, en configuration de nettoyage, mettre en circulation d'air de nettoyage vers la chambre d'alimentation par l'intermédiaire de ladite au moins une sortie d'air fluidisé.
- le réservoir de poudre comprend : une paroi supérieure, la chambre d'alimentation étant délimitée par la paroi supérieure et par la plaque de fluidisation ; et au moins une paroi latérale, reliant la paroi supérieure à la plaque de fluidisation et portant la sortie d'alimentation dudit au moins un projecteur, la sortie d'alimentation étant agencée plus proche de la plaque de fluidisation que de la paroi supérieure, la sortie étant de préférence située à une distance inférieure à 50 mm, par exemple inférieure à 25 mm, de la plaque de fluidisation.
- chaque sortie d'alimentation définit un orifice de sortie traversant la paroi latérale, chaque orifice de sortie définissant un axe d'orifice incliné par rapport à la plaque de fluidisation, d'un angle compris entre 30° et 60°, de préférence entre 45° et 55°.
- le réservoir de poudre comprend une sortie de vidange de la poudre contenue dans la chambre d'alimentation, la sortie de vidange traversant la plaque de fluidisation.
- ladite au moins une paroi latérale comprend une première paroi latérale et une deuxième paroi latérale opposées, délimitant entre elles la chambre d'alimentation ; et une pluralité de projecteurs est prévue, de sorte que, pour chaque projecteur, la ligne d'alimentation du projecteur concerné relie l'applicateur de poudre de ce projecteur à une sortie d'alimentation respective de la chambre d'alimentation, une première partie des sorties d'alimentation étant prévue au travers de la première paroi latérale, une deuxième partie des sorties d'alimentation étant prévue au travers de la deuxième paroi latérale.
- la chambre d'alimentation comprend au moins une entrée d'admission de poudre dans la chambre d'alimentation ; et ladite au moins une entrée de nettoyage comprend une entrée de nettoyage de ligne appartenant à la ligne d'alimentation dudit au moins un projecteur, l'entrée de nettoyage de ligne étant disposée entre l'applicateur de poudre et la sortie d'alimentation, de sorte que, en configuration de nettoyage, pour chaque projecteur, la source d'air de nettoyage peut être connectée à l'entrée de nettoyage de ligne pour mettre en circulation de l'air de nettoyage vers l'applicateur de poudre et vers la chambre d'alimentation, via la ligne d'alimentation.
- l'entrée de nettoyage de ligne comprend un filtre par l'intermédiaire duquel l'air de nettoyage est injecté dans la ligne d'alimentation, le filtre présentant une porosité inférieure à la granulométrie de la poudre, de préférence une porosité inférieure à 50 µm, par exemple une porosité inférieure à 30 µm.
- pour chaque projecteur, la ligne d'alimentation comprend une vanne, disposée entre la sortie d'alimentation et l'entrée de nettoyage de ligne, la vanne évoluant entre :
   o une configuration ouverte, dans laquelle la vanne autorise la circulation de l'air de nettoyage provenant de l'entrée de nettoyage de ligne vers la chambre d'alimentation et vers l'applicateur de poudre et
   ∘ une configuration fermée, dans laquelle la vanne interdit la circulation de l'air de nettoyage provenant de l'entrée de nettoyage de ligne vers la chambre d'alimentation, tout en autorisant la circulation d'air de nettoyage provenant de l'entrée de nettoyage de ligne vers l'applicateur de poudre via la ligne d'alimentation.
- pour chaque projecteur :
   ∘ la ligne d'alimentation comprend une pompe, disposée entre l'applicateur de poudre et l'entrée de nettoyage de ligne, et
   ∘ la pompe, en configuration de travail du système de poudrage, met en circulation de la poudre contenue dans la chambre d'alimentation jusqu'à l'applicateur de poudre, par l'intermédiaire de la ligne d'alimentation.

Selon un mode de réalisation indépendant vis-à-vis de l'invention définie ci-avant, on a un système de poudrage, présentant une configuration de travail et une configuration de nettoyage et comprenant :
- un réservoir de poudre, comprenant une chambre d'alimentation recevant de la poudre et comprenant au moins une entrée d'admission de poudre dans la chambre d'alimentation ; et
- au moins un projecteur, comprenant :
   ∘ un applicateur de poudre ; et
   ∘ une ligne d'alimentation, reliant l'applicateur de poudre à une sortie d'alimentation respective de la chambre d'alimentation, de sorte que, en configuration de travail, l'applicateur de poudre est alimenté avec de la poudre contenue dans la chambre d'alimentation par l'intermédiaire de la ligne d'alimentation.

Selon ce mode de réalisation indépendant, la ligne d'alimentation dudit au moins un projecteur comprend une entrée de nettoyage respective, disposée entre l'applicateur de poudre et la sortie d'alimentation, de sorte que, en configuration de nettoyage, pour chaque projecteur, une source d'air de nettoyage peut être connectée à l'entrée de nettoyage pour mettre en circulation de l'air de nettoyage vers l'applicateur de poudre et vers la chambre d'alimentation, via la ligne d'alimentation.

Grâce à ce mode de réalisation indépendant, le système de poudrage comprend autant d'entrées de nettoyage que de lignes d'alimentation, ce qui permet un nettoyage efficace et rapide, non seulement de la chambre d'alimentation, mais aussi des lignes d'alimentation elles-mêmes, incluant les sorties d'alimentation. On peut avantageusement prévoir que l'air de nettoyage est mis en circulation également au travers de l'applicateur de poudre de la ligne d'alimentation dont l'entrée de nettoyage reçoit la mise en circulation d'air de nettoyage.

L'air de nettoyage est avantageusement de l'air comprimé, ou tout mélange gazeux comprimé, adapté au nettoyage de la poudre.

Dans le mode de réalisation indépendant, le nettoyage est efficace, notamment dans la mesure où, au niveau des lignes d'alimentation, l'air de nettoyage emprunte le même chemin que la poudre aurait emprunté en configuration de travail. Chaque entrée de nettoyage étant disposée le long de l'une des lignes de nettoyage, c'est d'abord la ligne de nettoyage concernée qui est nettoyée, la ligne de nettoyage étant, dans l'art antérieur, relativement difficile à nettoyer. Le nettoyage peut être effectué de façon efficace, puisque la mise en circulation d'air de nettoyage se fait au travers de chaque sortie d'alimentation, généralement située dans une partie basse de la chambre d'alimentation. L'air de nettoyage est mis en circulation à une partie basse de la chambre d'alimentation, même si l'entrée d'admission de poudre est située en partie haute de la chambre d'alimentation.

En fonction du nettoyage souhaité, au moyen de la source d'air de nettoyage, on peut mettre de l'air de nettoyage en circulation dans une seule entrée de nettoyage à la fois, dans plusieurs entrées de nettoyage à la fois, ou dans toutes les entrées de nettoyage à la fois. De préférence, la source d'air de nettoyage est connectée à toutes les entrées de nettoyage en même temps, afin de pouvoir mettre en circulation l'air de nettoyage de la façon souhaitée, en sélectionnant une ou plusieurs entrées de nettoyage où de l'air de nettoyage est mis en circulation. De préférence, pour basculer entre les configurations de travail et de nettoyage, il n'est pas obligatoire de connecter et déconnecter la source d'air de nettoyage des entrées de nettoyage, ce qui facilite l'automatisation du nettoyage. En effet, les entrées de nettoyage n'ont avantageusement pas d'autre fonction que l'admission et/ou l'évacuation d'air de nettoyage. A chaque entrée de nettoyage, on peut prévoir que la source d'air de nettoyage souffle de l'air de nettoyage. On peut prévoir que la mise en circulation est effectuée de façon pulsée ou continue.

Des aspects avantageux mais non obligatoires du mode de réalisation indépendant sont définis ci-dessous :
- l'entrée de nettoyage comprend un filtre par l'intermédiaire duquel l'air de nettoyage est injecté dans la ligne d'alimentation.
- le filtre présente une porosité inférieure à la granulométrie de la poudre, de préférence une porosité inférieure à 50 µm, par exemple une porosité inférieure à 30 µm.
- pour chaque projecteur, la ligne d'alimentation comprend une vanne, disposée entre la sortie d'alimentation et l'entrée de nettoyage, la vanne évoluant entre une configuration ouverte, dans laquelle la vanne autorise la circulation de l'air de nettoyage provenant de l'entrée de nettoyage vers la chambre d'alimentation et l'applicateur de poudre et une configuration fermée, dans laquelle la vanne interdit la circulation de l'air de nettoyage vers la chambre d'alimentation tout en autorisant la circulation d'air de nettoyage vers l'applicateur de poudre via la ligne d'alimentation.
- pour chaque projecteur :
   ∘ la ligne d'alimentation comprend une pompe, disposée entre l'applicateur de poudre et l'entrée de nettoyage, et
   ∘ la pompe, en configuration de travail du système de poudrage, met en circulation de la poudre contenue dans la chambre d'alimentation jusqu'à l'applicateur de poudre, par l'intermédiaire de la ligne d'alimentation.
- le réservoir de poudre comprend :
   ∘ une paroi supérieure ;
   ∘ une plaque de fluidisation, la chambre d'alimentation étant délimitée par la paroi supérieure et par la plaque de fluidisation, la plaque de fluidisation émettant de l'air de fluidisation de la poudre contenue dans la chambre d'alimentation ; et
   ∘ au moins une paroi latérale, reliant la paroi supérieure à la plaque de fluidisation et portant la sortie d'alimentation dudit au moins un projecteur, la sortie d'alimentation étant agencée plus proche de la plaque de fluidisation que de la paroi supérieure, l'orifice de la sortie étant de préférence situé à une distance inférieure à 50 mm, par exemple inférieure à 25 mm, de la plaque de fluidisation.
- chaque sortie d'alimentation définit un orifice de sortie traversant la paroi latérale, chaque orifice de sortie définissant un axe d'orifice incliné par rapport à la plaque de fluidisation, d'un angle compris entre 30° et 60°, de préférence entre 45° et 55°.
- le réservoir de poudre comprend une sortie de vidange de la poudre contenue dans la chambre d'alimentation, la sortie de vidange traversant la plaque de fluidisation.
- le système de poudrage comprend la source d'air de nettoyage, fluidiquement connectée à la ligne d'alimentation via l'entrée de nettoyage, pour mettre en circulation de l'air de nettoyage vers et/ou à partir de la chambre d'alimentation, par l'intermédiaire de la ligne d'alimentation, lorsque le système de poudrage est en configuration de nettoyage.
- le réservoir comprend une première paroi latérale et une deuxième paroi latérale opposées, délimitant entre elles la chambre d'alimentation.
- une pluralité de projecteurs est prévue, de sorte que, pour chaque projecteur, la ligne d'alimentation du projecteur concerné relie l'applicateur de poudre de ce projecteur à une sortie d'alimentation respective de la chambre d'alimentation, une première partie des sorties d'alimentation étant prévue au travers de la première paroi latérale, une deuxième partie des sorties d'alimentation étant prévue au travers de la deuxième paroi latérale.

L'invention et le mode de réalisation indépendant seront mieux compris à la lumière de la description qui suit, montrant des exemples de réalisation d'un système de poudrage conforme à l'invention, en référence aux dessins annexés, dans lesquels :
- la figure 1 est une vue en perspective d'un système de poudrage selon un mode de réalisation conforme à l'invention ;
- la figure 2 est une coupe longitudinale du système de poudrage de la figure 1 ;
- la figure 3 est une coupe transversale du système de poudrage des figures précédentes, dans une configuration de travail ;
- la figure 4 est une coupe transversale, similaire à celle de la figure 3, du système de poudrage des figures précédentes, dans une configuration de nettoyage.

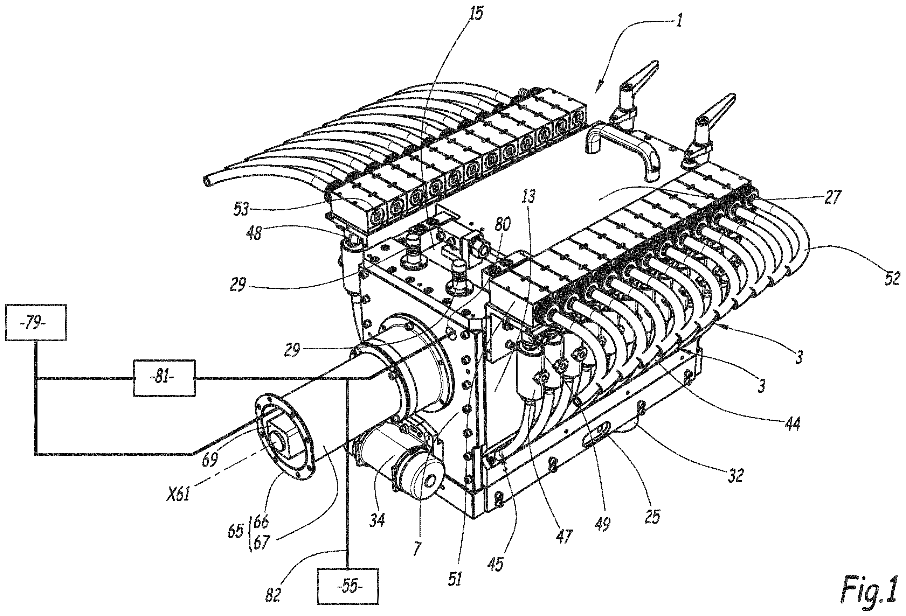

Les figures 1 à 4 montrent un système de poudrage, comprenant un réservoir de poudre 1 et une pluralité de projecteurs 3. Les projecteurs 3 sont partiellement représentés sur la figure 1. Deux des projecteurs 3 sont schématiquement représentés sur chacune des figues 3 et 4.

Ici, vingt-quatre projecteurs 3 sont prévus pour le réservoir 1. En variante, on prévoit un nombre de projecteurs 3 différent de vingt-quatre, au minium un seul projecteur 3.

Le système de poudrage évolue entre une configuration de travail et une configuration de nettoyage. La configuration de nettoyage est notamment mise en oeuvre préalablement à l'introduction, dans le réservoir 1, d'une nouvelle poudre dont les caractéristiques, par exemple la couleur, sont différentes de celles d'une poudre résiduelle précédemment contenue dans le réservoir.

En configuration de travail, le système de poudrage est conçu pour effectuer un poudrage, de préférence un poudrage électrostatique, par l'intermédiaire des projecteurs 3, pour revêtir un ou plusieurs objets, non illustrés, avec de la poudre contenue dans le réservoir 1. La poudre peut notamment servir à peindre l'objet en question.

La poudre en question est par exemple une poudre de résine thermodurcissable.

Le réservoir 1 est avantageusement de forme générale parallélépipédique. Dans ce cas, le réservoir 1 comprend quatre parois latérales 7, 9, 11 et 13, qui sont avantageusement verticales lors de l'utilisation du réservoir 1. Ces parois latérales comprennent en particulier une paroi latérale avant 7 et une paroi latérale arrière 9, opposées et parallèles, ainsi qu'une paroi latérale gauche 11 et une paroi latérale droite 13, opposées et parallèles, les parois latérales 11 et 13 reliant chacune les parois 7 et 9 entre elles. Le réservoir 1 comprend aussi une paroi supérieure 15 et une paroi de fond 17, qui sont opposées et avantageusement parallèles entre elles. A leur périmètre respectif, les parois 15 et 17 ferment les parois latérales 7, 9, 11 et 13 respectivement par le haut et par le bas.

Le réservoir 1 comprend avantageusement une plaque 19, disposée à l'intérieur du réservoir 1, en cloison, entre la paroi supérieure 15 et la paroi de fond 17. La plaque 19 est avantageusement parallèle à la paroi de fond 17. A son périmètre, la plaque 19 relie les parois 7, 9, 11 et 13. Ainsi, chaque paroi latérale 7, 9, 11 et 13 relie la plaque 19 à la paroi supérieure 15 et à la paroi de fond 17.

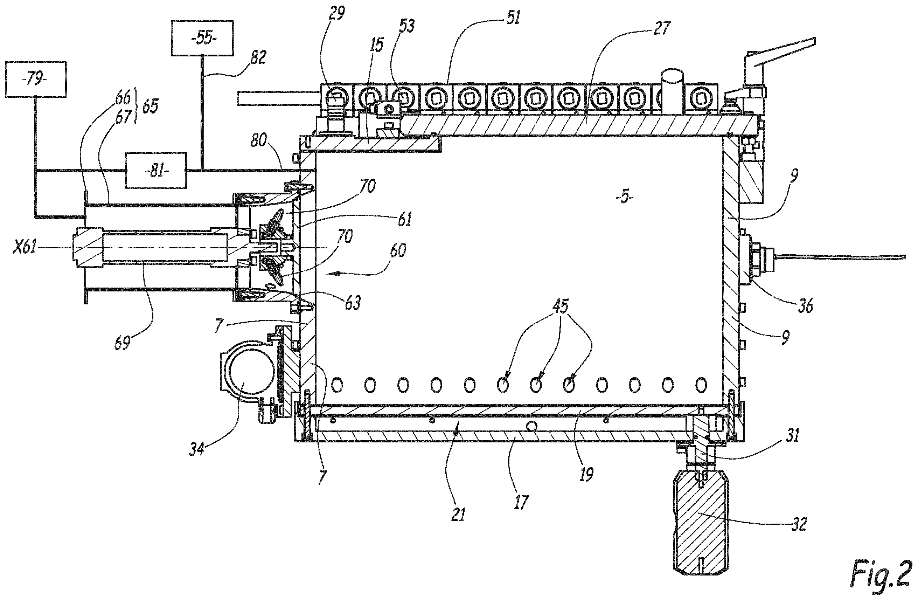

Le réservoir 1 comprend une chambre d'alimentation 5, visible sur les figures 2 à 4, au-dessus de la plaque 19. Dans l'exemple des figures, la chambre 5 est délimitée par les parois 7, 9, 11, 13 et 15 et par la plaque 19, de sorte à définir, de préférence, un volume généralement parallélépipédique. La chambre 5 se trouve donc disposée entre les parois latérales 11 et 13 opposées, et entre les parois latérales 7 et 9 opposées, qui délimitent la chambre 5 entre elles. La chambre 5 constitue avantageusement un volume rigide, du fait de la rigidité des parois 7, 9, 11, 13 et 15 et de la plaque 19. La chambre 5 définit par exemple un volume compris entre 1 litre et 30 litres, et peut avoir une contenance maximale comprise entre 1 et 15 kilogrammes de poudre.

Le réservoir 1, et en particulier les parois 7 à 17, constitue une enceinte fermée étanche à l'air et à la poudre, hormis pour les différentes entrées et sorties du réservoir 1 décrites ci-dessous. Au sens de l'invention, chaque « entrée » et « sortie » comprend par exemple à un orifice ou une ouverture par lequel un fluide, tel que de l'air ou de la poudre en suspension dans de l'air, peut respectivement entrer ou sortir d'un espace attenant.

De préférence, la paroi supérieure 15 est traversée par une ouverture d'accès, pour l'accès à la chambre 5 par une personne à des fins de maintenance, mettant en communication la chambre 5 et l'extérieur du réservoir 1. L'ouverture d'accès peut être fermée par un capot amovible 27 du réservoir 1. En configuration de travail et en configuration de nettoyage, cette ouverture d'accès est fermée de façon étanche à l'air par le capot amovible 27.

En configuration de travail, la chambre 5 reçoit de la poudre pour l'alimentation des projecteurs 3 en vue du revêtement de l'objet à revêtir. Pour cela, le réservoir 1 comprend une ou plusieurs entrées de poudre 29, qui sont portées par exemple par la paroi supérieure 15. Chaque entrée 29 est connectée à une source d'alimentation en poudre du réservoir 1, de préférence automatique. Ici, deux entrées 29 sont prévues, l'une servant à l'admission de poudre neuve dans la chambre 5, l'autre servant à l'admission de poudre recyclée dans la chambre 5. Par « poudre recyclée », on entend de la poudre récupérée, et éventuellement traitée, à l'issue d'une précédente opération de pulvérisation sur un objet.

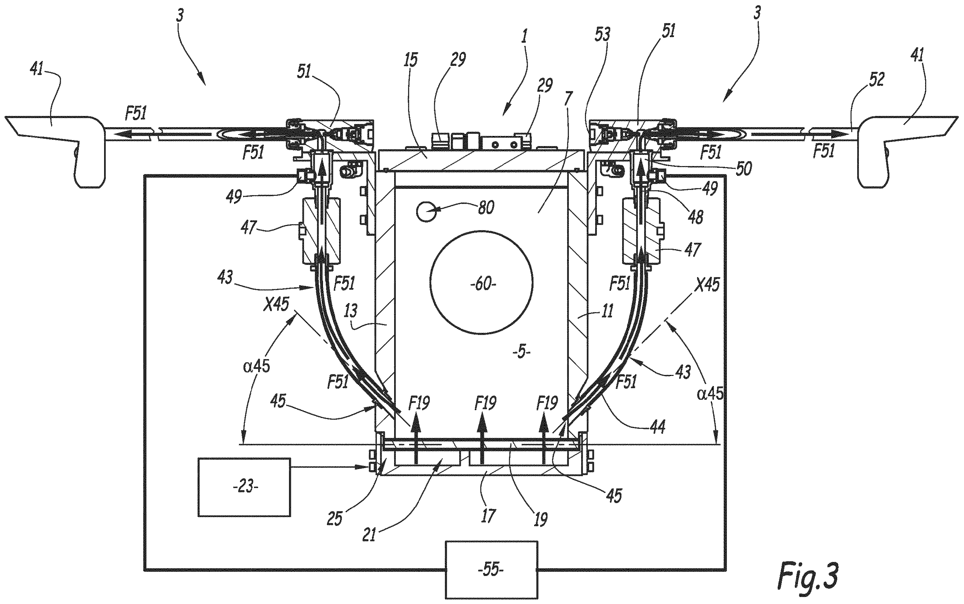

En configuration de travail, la poudre contenue dans la chambre 5 est mise dans un état fluidisé, c'est-à-dire est mise en suspension, de façon à se répartir et à être mouvante dans le volume de la chambre 5. Pour cela, la plaque 19 est une plaque de fluidisation poreuse. Comme montré sur la figure 3, à partir de la plaque 19, de l'air de fluidisation F19 est émis et injecté dans la chambre 5, de façon répartie sur tout ou l'essentiel de la surface de la plaque 19. De préférence, le réservoir 1 délimite une chambre 21 d'air de fluidisation, délimitée par la plaque 19 et les parois 7, 9, 11, 13 et 17, au-dessous de la plaque 19, au sein de laquelle de l'air comprimé est introduit sous pression, de sorte à traverser la plaque 19 pour être introduit dans la chambre 5 et ainsi fluidiser la poudre contenue dans la chambre 5. L'air de fluidisation est avantageusement introduit dans la chambre 21 par une source d'air comprimé 23, par l'intermédiaire d'une entrée d'air de fluidisation 25, débouchant dans la chambre 21, et étant ménagée au travers de l'une des parois du réservoir 1. La plaque 19 est poreuse pour être traversée par l'air de fluidisation F19 et permettre son passage depuis la chambre 21 jusque dans la chambre 5. Toutefois, la plaque 19 est imperméable à la poudre contenue dans la chambre 5, afin d'éviter que cette poudre ne passe dans la chambre 21. Pour cela, la porosité de la plaque 19 est inférieure à la granulométrie de la poudre.

Du fait de la fluidisation, la chambre 5 et la chambre 21 sont sous pression en configuration de travail.

Comme montré de façon schématique sur la figure 1, on prévoit avantageusement au moins une sortie 80 d'air de fluidisation au travers de la paroi 7. De préférence, deux sorties 80 sont prévues. Chaque sortie 80 est distincte des autres entrées et sorties décrites dans le présent document. Chaque sortie d'air de fluidisation 80 est avantageusement raccordée à un système d'aspiration 79 illustré schématiquement sur les figures 1 et 2, par l'intermédiaire d'une vanne 81 respective. La vanne 81 est préférentiellement une vanne manchon, actionnée par une source d'air comprimé.

De préférence, chaque sortie 80 est connectée au système d'aspiration 79, en configuration de travail et en configuration de nettoyage, ce qui facilite l'automatisation en évitant d'avoir à connecter et déconnecter le système d'aspiration 79. En configuration de travail, chaque sortie 80 permet l'évacuation de l'air fluidisé introduit dans la chambre d'alimentation 5 jusque dans le système 79. Pour cela, la vanne manchon 81 est alors ouverte. Le système d'aspiration 79 est conçu pour évacuer, recycler et/ou traiter, la poudre résiduelle en provenance de la chambre 5.

De préférence, on prévoit également une entrée d'air de nettoyage 82 respective, équipant chacune de ces sorties d'air de fluidisation 80, à l'extérieur du réservoir 1. L'entrée d'air 82 permet l'introduction d'air de nettoyage jusque dans la chambre 5, via l'orifice que forme la sortie 80. Pour cela, une source d'air de nettoyage 55 est fluidiquement connectée à l'entrée d'air 82. L'entrée de nettoyage 82 comprend par exemple un raccord fluidique, pour connecter un conduit d'air de nettoyage alimenté par la source 55. La source 55 est avantageusement une source d'air comprimé, l'air comprimé servant d'air de nettoyage.

L'entrée d'air 82 est utilisée en configuration de nettoyage et n'est avantageusement pas utilisée en configuration de travail. Si une telle entrée 82 est prévue, l'entrée de nettoyage 82 est préférentiellement interposée entre la vanne manchon 81 et la sortie d'air de fluidisation 80. En configuration de nettoyage, le nettoyage de la chambre 5 peut ainsi être effectué depuis chaque sortie 80, de l'air de nettoyage étant introduit depuis chaque entrée 82 jusque dans la chambre 5, via chaque sortie 80 respective concernée.

En configuration de nettoyage, la vanne 81 respective de chaque sortie 80 est avantageusement maintenue fermée, de sorte que de l'air de nettoyage peut être injecté vers la chambre 5 par l'intermédiaire de l'entrée 82, via la sortie 80.

L'entrée de nettoyage 82 comprend avantageusement un clapet, obturant la circulation de poudre au travers de l'entrée de nettoyage 82 tout en autorisant la circulation d'air. Ainsi, le clapet empêche sensiblement toute remontée de poudre vers la source 55.

En configuration de nettoyage, lorsque l'on souhaite que de l'air de nettoyage soit introduit seulement par d'autres entrées de nettoyage telles que celles décrites plus bas, la vanne 81 peut être soit fermée soit ouverte.

Le réservoir 1 comprend préférentiellement une sortie 31 de vidange de la poudre contenue dans la chambre d'alimentation 5. La sortie 31 est prévue au travers de la plaque 19 et est apte à conduire la poudre depuis l'intérieur de la chambre 5 jusqu'à l'extérieur du réservoir 1. Plus précisément, la sortie 31 comprend un conduit, traversant la paroi 17, la chambre 21 et la plaque 19, et débouchant, à une extrémité, dans la chambre 5, et à l'autre extrémité, hors du réservoir 1. La sortie 31 porte, à l'extérieur du réservoir 1, une vanne 32, pour pouvoir être ouverte ou fermée. En configuration de travail et en configuration de nettoyage, la sortie 31 est fermée. De préférence, la vanne 32 est une vanne manchon, actionnée par une source d'air comprimé.

Le réservoir 1 comprend préférentiellement un vibrateur 34, porté par la paroi avant 7, à l'extérieur et à hauteur de la chambre 5.

Le réservoir comprend préférentiellement un ou plusieurs capteurs 36, portés par la paroi arrière 9, pour déterminer le niveau de poudre dans la chambre 5.

Le réservoir 1 comprend une ouverture d'évacuation 60, ménagée au travers de la paroi avant 7 et débouchant dans la chambre d'alimentation 5. On note que l'ouverture 60 est distincte des autres entrées et sorties mentionnées dans le présent document.

Le réservoir 1 comprend avantageusement un raccord de connexion 65, comprenant ici une collerette annulaire 66 et un conduit tubulaire 67. Le conduit tubulaire 67, est attaché à la paroi 7 par une première extrémité, de façon à entourer l'ouverture 60. A son autre extrémité libre, le conduit tubulaire 67 porte la collerette 66. La collerette 66 est pourvue d'orifices pour recevoir des vis ou similaires, pour raccorder fluidiquement l'ouverture 60 au système d'aspiration 79, comme représenté schématiquement sur les figures 1 et 2. Par exemple, la collerette 66 est raccordée au système d'aspiration 79 via un conduit d'aspiration du système d'aspiration 79. De préférence, l'ouverture 60 est connectée au système d'aspiration 79 en configuration de travail et en configuration de nettoyage, ce qui évite d'avoir à connecter et déconnecter ce conduit d'aspiration de façon à faciliter l'automatisation.

Comme mieux visible sur la figure 2, le réservoir 1 comprend une bonde mobile 61, qui évolue entre une position d'obturation de l'ouverture 60, adoptée en configuration de travail, et une position d'ouverture de l'ouverture 60, adoptée en configuration de nettoyage. La bonde 61 constitue un bouchon amovible. Pour évoluer entre sa position d'obturation et d'ouverture, la bonde 61 se déplace avantageusement en translation selon un axe X61 orthogonal à la paroi 7. Le conduit 67, s'il est prévu, est avantageusement coaxial avec l'axe X61.

De préférence, la bonde 61 présente une forme discoïde, un bord 63 de délimitant l'ouverture 60 étant elle-même de forme correspondante circulaire, de façon à entourer et épouser la bonde 61 en son contour, lorsque la bonde est en position d'obturation.

La figure 2 montre la bonde 61 en position d'obturation. En position d'ouverture, la bonde est déplacée le long de l'axe X61 vers l'intérieur de la chambre 5, c'est-à-dire, sur la figure 2, vers la droite. Une fois la position d'ouverture atteinte, la bonde 61 est de préférence entièrement à l'intérieur de la chambre 5, alors qu'en position d'obturation, la bonde 61 est de préférence disposée dans le plan de la paroi 7. Grâce à ces dispositions, en configuration de travail, la pression de l'air à l'intérieur de la chambre 5 a tendance à plaquer la bonde 61 vers sa configuration d'obturation, ce qui garantit l'étanchéité de l'obturation à l'air et à la poudre.

De préférence, lorsque la bonde 61 est déplacée vers la position d'ouverture, la bonde 61 ouvre un passage annulaire délimité entre la circonférence de la bonde 61, au contour circulaire, et la circonférence de l'ouverture 60, également au contour circulaire. En configuration d'obturation, la bonde 61 est en appui étanche à l'air et à la poudre contre le bord 63, constituant un siège d'étanchéité, par exemple un appui conique centré sur l'axe X61. Pour obtenir un appui conique, comme montré sur la figure, on prévoit que le contour de la bonde 61 est de forme conique, tout comme le contour de l'ouverture 60, qui présente une forme conique complémentaire.

En variante, d'autres formes complémentaires peuvent être prévues pour la bonde 61 et l'ouverture 60.

Pour actionner automatiquement le déplacement de la bonde 61 entre ses deux positions susmentionnées, le réservoir 1 comprend avantageusement un actionneur automatique 69, par exemple un vérin pneumatique axial, lequel est parallèle ou coaxial à l'axe X61. La position de la bonde 61 est donc automatiquement modifiée par l'actionneur 69, selon si le système de poudrage est en configuration de travail ou en configuration de nettoyage. L'actionneur 69 est avantageusement situé à l'extérieur de la chambre 5, la bonde 61 étant alors interposée entre l'actionneur 69 et la chambre 5 pour protéger l'actionneur 69, notamment en position d'obturation. La bonde 61 est avantageusement portée par l'actionneur 69, par l'intermédiaire d'une tige coaxiale avec l'axe X61, reliant l'actionneur 69 à la bonde 61.

Comme montré sur la figure 2, le réservoir 1 comprend préférentiellement une ou plusieurs entrées de nettoyage au niveau de l'ouverture 60, qui se présentent sous la forme de buses de nettoyage 70. Chaque buse 70 est alimentée par une source d'air de nettoyage. De préférence, la même source d'air de nettoyage 55 que celle mentionnée ci-avant alimente les buses 70 en air de nettoyage.

Chaque buse 70 est disposée en étant orientée en direction de l'ouverture 60, plus précisément en direction de l'interstice annulaire formé entre le contour de la bonde 61 et le siège 63 lorsque la bonde 61 est en position d'ouverture. Ici, les buses 70 dont disposées entre l'actionneur 69 et la bonde 61, selon l'axe X61. Lorsque plusieurs buses 70 sont prévues, elles sont de préférence régulièrement réparties autour de l'axe X61, comme montré sur la figure 2. Chaque buse 70 est préférentiellement inclinée par rapport à l'axe X61, de sorte à projeter un flux d'air oblique, qui est donc à la fois dirigé selon une direction centrifuge par rapport à l'axe X61 et à la fois dirigé vers l'intérieur de la chambre 5.

Dans le présent exemple, les buses 70 sont des buses mobiles. En effet, les buses 70 sont fixées à la bonde 61 et se déplacent donc solidairement avec ladite bonde 61, lorsque la bonde 61 est déplacée entre les positions d'ouverture et d'obturation. En position d'obturation de la bonde 61, les buses 70 sont en retrait par rapport au siège 63, en direction de l'extérieur du réservoir 1, le long de l'axe X1, comme montré sur la figure 2. Dans la position d'obturation, la bonde mobile 61 est interposée entre chaque buse de nettoyage mobile 70 et l'intérieur de la chambre d'alimentation 5. Ainsi, en configuration de travail ou de la poudre à l'état fluidisé est présente dans la chambre 5, les buses mobiles 70 sont protégées de ladite poudre.

Lorsque la bonde 61 passe en position d'ouverture, les buses 70 sont amenées jusqu'à hauteur du siège 63, voire par-delà le siège 63, le long de l'axe X1, de façon à être au moins partiellement positionnées à l'intérieur de la chambre 5, lorsque la position d'ouverture est atteinte. On pourrait prévoir que, en position d'ouverture, la bonde 61 soit plus avancée vers l'intérieur de la chambre 5, de sorte que les buses 70 sont totalement positionnées à l'intérieur de la chambre 5. Quelle que soit la solution retenue, le déplacement des buses 70 sous l'action de la bonde 61 permet à la fois, en configuration de nettoyage, d'étendre la zone de soufflage, et en configuration de travail, de protéger les buses 70.

En position d'ouverture, chaque buse 70 peut souffler de l'air de nettoyage en direction de l'intérieur de la chambre d'alimentation 5, au travers de l'ouverture d'évacuation 60. De préférence, le soufflage des buses 70 est activé automatiquement lorsque la bonde 61 est en position d'ouverture, c'est-à-dire lorsque le réservoir est en configuration de nettoyage.

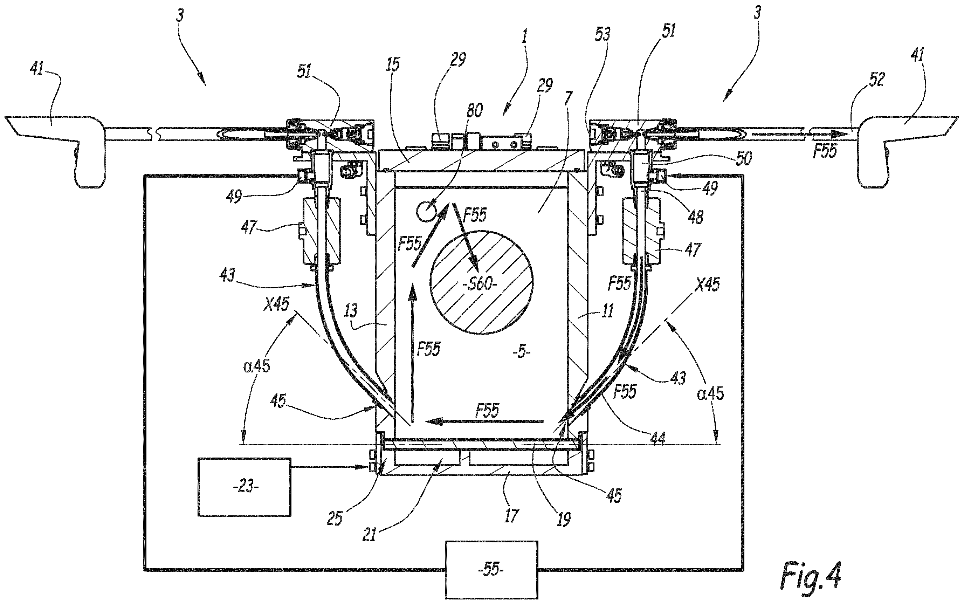

Comme mieux visible sur les figures 3 et 4, chaque projecteur 3 comprend un applicateur de poudre 41. L'applicateur 41 est disposé à l'extérieur, et de préférence à distance, du réservoir 1. Par exemple, l'applicateur 41 se présente sous la forme d'un pulvérisateur ou d'un pistolet à poudre, manipulable à la main ou par un robot, ou étant fixe. En configuration de travail, chaque applicateur 41 est apte à projeter de la poudre en direction d'un objet à revêtir, afin de le revêtir avec la poudre ainsi projetée.

Pour le cas préférentiel d'un poudrage électrostatique, le système de poudrage comprend des moyens pour appliquer une charge électrique à la poudre, ces moyens appartenant par exemple à l'applicateur 41. L'objet à revêtir est quant à lui avantageusement mis à la masse, ou porte une charge électrique négative, de sorte que la poudre, projetée par l'applicateur 41 à l'encontre de l'objet, est attirée par force de Coulomb et adhère à cet objet. De préférence, l'objet ainsi revêtu de poudre est ensuite passé au four, notamment pour entraîner une adhésion définitive de la poudre à l'objet par polymérisation.

De préférence, la partie de la poudre qui n'a pas revêtu l'objet est récupérée afin d'être réintroduite dans le réservoir 1 en tant que poudre recyclée, après d'éventuels traitements tels qu'un filtrage, via l'une des entrées 29.

Chaque projecteur 3 comprend une ligne d'alimentation 43, reliant l'applicateur 41 à une sortie d'alimentation 45 respective de la chambre d'alimentation 5. On entend ainsi que les projecteurs 3 sont connectés à la chambre 5 par des sorties 45 individuelles. Si un seul projecteur 3 est prévu, une seule sortie 45 est prévue. On note que les sorties 45 sont distinctes de la sortie 31. Plus précisément, comme visible sur les figures 2 à 4, chaque sortie 45 définit un orifice de sortie qui traverse l'une des deux parois latérales 11 ou 13. Chaque orifice de sortie est de forme générale cylindrique, coaxiale avec un axe d'orifice X45. Chaque axe d'orifice X45 est incliné par rapport à la plaque de fluidisation 19, d'un angle **α**45 compris entre 30° et 60°, idéalement entre 45° et 55°. Sur les figures 2-4, l'ange est de 50°.

En cas d'une pluralité de projecteurs 3, comme sur les figures, chaque sortie 45 est avantageusement prévue au travers de l'une des parois latérales 11 et 13. Chaque paroi 11 et 13 comporte avantageusement plusieurs sorties 45, et alimente ainsi plusieurs projecteurs 3. De préférence, un nombre égal de projecteurs 3 est connecté à la chambre 5 via la paroi 11 et via la paroi 13, chaque paroi 11 et 13 portant un nombre égal de sorties 45. En d'autres termes, une première partie des sorties 45 est prévue au travers de la paroi latérale 11 et une deuxième partie des sorties 45 est prévue au travers de la paroi latérale 13.

Chaque sortie 45 est agencée plus proche de la plaque de fluidisation 19 que de la paroi supérieure 15. En pratique, on place les sorties 45 au plus près possible de la plaque 19. De préférence, chaque orifice de sortie 45 est situé à une distance inférieure à 50 mm, par exemple inférieure à 25 mm, de la plaque de fluidisation. Sur chaque paroi 11 et 13, les sorties 45 sont réparties depuis la paroi 7 jusqu'à la paroi 9, de préférence de façon régulière. Comme mieux visible sur la figure 2, ici, chaque paroi 11 et 13 reçoit une pluralité de sorties 45 agencées selon une rangée parallèle à la plaque 19. Cet agencement permet que toute zone de la chambre 5 contenant de la poudre puisse alimenter les projecteurs 3, sans zone de la chambre 5 où de la poudre ne pourrait pas être récupérée par les projecteurs 3.

En configuration de travail, chaque applicateur 41 est alimenté avec de la poudre contenue dans la chambre d'alimentation 5 par l'intermédiaire sa ligne d'alimentation 43 respective, par l'intermédiaire de la sortie 45 à laquelle la ligne 43 est connectée.

Chaque ligne 43 comprend avantageusement une vanne 47, qui est de préférence directement reliée à la sortie 45 de cette ligne 43 par un conduit 44, sans dérivation, appartenant à la ligne 43. La vanne 47 permet d'ouvrir et fermer la ligne 43. En d'autres termes, la vanne 47 évolue entre une configuration ouverte, dans laquelle la vanne 47 autorise l'alimentation de l'applicateur 41 avec de la poudre contenue dans la chambre 5, par l'intermédiaire de la ligne d'alimentation 43, et une configuration fermée, dans laquelle la vanne 47 interdit l'alimentation en poudre contenue dans la chambre 5, par l'intermédiaire de la ligne d'alimentation 43, de l'applicateur 41. En configuration de travail, chaque vanne 47 permet de choisir si l'applicateur 41 qui y est raccordé peut être alimenté ou non avec de la poudre provenant de la chambre 5, la vanne 47 obturant ou ouvrant la ligne 43. De préférence, chaque vanne 47 est une vanne manchon, actionnée par une source d'air comprimé.

Chaque ligne 43 comprend de préférence une entrée de nettoyage 49, qui est avantageusement directement reliée à la vanne 47 par un conduit 48, sans dérivation, appartenant à la ligne 43, de sorte que la vanne 47 est fluidiquement interposée entre l'entrée 49 et la sortie 45. L'entrée de nettoyage 49 est utilisée en configuration de nettoyage, mais, de préférence, n'est pas utilisée en configuration de travail. La source 55 d'air de nettoyage est fluidiquement connectée à la ligne d'alimentation 43 via l'entrée de nettoyage 49. Il peut s'agir de la même source d'air de nettoyage que pour les entrées 70 et/ou 82, ou d'une seconde source d'air de nettoyage distincte. L'entrée de nettoyage 49 comprend par exemple un raccord fluidique, pour connecter un conduit d'air de nettoyage alimenté par la source 55.

L'entrée de nettoyage 49 peut être qualifiée « entrée de nettoyage de ligne » même si son action de nettoyage ne se limite pas nécessairement à la ligne 43 à laquelle l'entrée 49 appartient.

L'entrée de nettoyage 49 comprend avantageusement un filtre poreux, obturant la circulation de poudre au travers de l'entrée de nettoyage 49 tout en autorisant la circulation d'air. Ainsi, le filtre poreux empêche sensiblement toute remontée de poudre vers la source 55. De préférence, le filtre poreux est en matière poreuse, et se présente par exemple sous la forme d'un tube en matière poreuse. Le filtre poreux, en particulier sa matière poreuse, présente une porosité inférieure à la granulométrie de la poudre, de préférence inférieure à 50 µm (micromètres), par exemple inférieure à 30 µm.

Comme illustré sur la figure 4 par les flèches F55, en configuration de nettoyage, la source 55 met en circulation de l'air de nettoyage, de préférence sous pression, à partir de certaines entrées 49, jusque dans la chambre 5. Pour atteindre la chambre 5 depuis l'une des entrées 49, l'air de nettoyage circule via le conduit 48, via la vanne 47, si une telle vanne 47 est prévue en interposition entre l'entrée 49 et la sortie 45, via le conduit 44 et via la sortie 45. De l'air de nettoyage atteint la chambre 5 seulement si la vanne 47 est en configuration ouverte.

La figure 4 montre un cas où de l'air de nettoyage est injecté seulement par les entrées 49 situées à droite de la figure 4, c'est-à-dire à partir des lignes 43 attachées à la paroi 11. Dans cette situation, l'air circule dans la chambre 5 selon une trajectoire en spirale, de façon à lécher notamment la plaque 19 et la paroi latérale 13 opposée à ladite paroi 11. La circulation d'air de nettoyage dans la chambre 5 est très turbulente de sorte que le nettoyage est particulièrement efficace. La poudre résiduelle est nécessairement délogée des sorties 45 et des vannes 47, qui sont directement sur le trajet de l'air de nettoyage circulant dans la ligne 43. Les sorties 45 étant avantageusement orientées de façon inclinée en direction de la plaque 19, l'air de nettoyage vient frapper la plaque 19 avec force, au voisinage de chaque sortie 45 alimentée par de l'air de nettoyage.

L'air de nettoyage ainsi mis en circulation décolle et entraîne avec lui de la poudre résiduelle, contenue dans les différents éléments du système de poudrage que l'air, ainsi mis en circulation, traverse. En particulier, la chambre 5 est nettoyée, ainsi que les sorties 45 et les vannes 47.

Chaque ligne 43 comprend avantageusement, une pompe 51, qui est avantageusement directement reliée à l'entrée de nettoyage 49 par un conduit 50, sans dérivation, appartenant à la ligne 43. Un autre conduit 52, sans dérivation, appartenant à la ligne 43, relie la pompe 51 à l'applicateur 41. Ainsi, la pompe 51 est fluidiquement interposée entre l'entrée 49 et l'applicateur 41. En configuration de travail, sur commande d'un utilisateur ou d'un automate, comme montré sur la figure 3, la pompe 51 aspire la poudre contenue dans la chambre 5 via la sortie 45 et l'envoie en direction de l'applicateur 41 via le conduit 52. Sur la figure 3, le trajet de la poudre ainsi mise en circulation par la pompe 51 est représenté par les flèches F51.

Pour chaque ligne 43, la mise en circulation de la poudre est possible lorsque la vanne 47 est en configuration ouverte. En d'autres termes, la pompe 51, en configuration de travail du système de poudrage, met en circulation de la poudre contenue dans la chambre 5 jusqu'à l'applicateur 41, par l'intermédiaire de la ligne d'alimentation 43 de cette pompe 51. La pompe 51 fournit suffisamment d'énergie cinétique à la poudre pour obtenir la projection de celle-ci hors de l'applicateur 41. La pompe 51 est avantageusement une pompe à effet Venturi, comprenant au moins une entrée d'alimentation 53 en air comprimé, pour son fonctionnement.

En configuration de nettoyage, lorsque la source 55 injecte de l'air de nettoyage par l'entrée 49, on peut prévoir que la vanne 47 est en configuration fermée, de sorte que l'air de nettoyage est mis en circulation jusque dans l'applicateur 41, par l'intermédiaire du conduit 50, de la pompe 51 et de la conduite 52, comme représenté par la flèche en pointillés sur la figure 4. Le nettoyage de la partie du projecteur 3 s'étendant jusqu'à l'applicateur 41 est alors particulièrement efficace.

En configuration de nettoyage, on peut aussi prévoir que la vanne 47 est en configuration ouverte, de sorte que l'air de nettoyage est mis en circulation non seulement jusque dans l'applicateur 41, par l'intermédiaire du conduit 50, de la pompe 51 et de la conduite 52, mais aussi jusque dans la chambre 5, par l'intermédiaire du conduit 48, de la vanne 47, du conduit 44 et de la sortie 45. Est alors opéré un nettoyage complet de la ligne 43, avantageusement avec une efficacité plus élevée côté chambre 5 que côté applicateur 41.

Plus généralement, la vanne 47, l'entrée de nettoyage 49, la pompe 51 sont chacune fluidiquement interposées, le long de la ligne 43, entre l'applicateur 41 et la sortie 45. La vanne 47, l'entrée de nettoyage 49, la pompe 51 et l'applicateur 41 sont connectés en série, successivement l'un à la suite de l'autre, le long de la ligne 43.

Lorsque, en configuration de nettoyage, de l'air de nettoyage est mis en circulation vers la chambre d'alimentation 5 depuis une ou plusieurs des entrées 49, 70 et/ou 82, la poudre résiduelle est transportée par l'air de nettoyage hors du réservoir 1, en particulier hors de la chambre 5, via l'ouverture 60, dont la bonde 61 est alors en position d'ouverture. Il est alors avantageux de prévoir que le système d'aspiration 79 est connecté à la sortie 60. Dans la mesure où, en configuration de nettoyage, une quantité importante d'air de nettoyage est mise en circulation au travers de la chambre 5, on préfère prévoir que l'ouverture 60 est de grande taille. Comme montré par des hachures sur la figure 4, en configuration d'ouverture de la bonde 61, l'ouverture d'évacuation 60 définit une section de passage S60 d'air de nettoyage, préférentiellement délimitée par le contour de l'ouverture 60 et dans un plan orthogonal à l'axe X61. De même, comme montré sur la figure 2, chaque entrée de nettoyage 49, 70 et 82 définit une section de passage d'air de nettoyage. Chacune de ces sections de passage est délimitée par le contour de l'ouverture de l'entrée de nettoyage concernée. L'aire de la section S60 est avantageusement supérieure à la somme des aires des sections de toutes les entrées de nettoyage 49, 70 et 82. De préférence, l'aire de la section S60 est plus de deux fois supérieure à la somme des aires des sections de toutes les entrées de nettoyage 49, 70 et 82. La section S60 étant de taille importante, l'expulsion de la poudre résiduelle hors de la chambre 5 est facilitée, puisque la chambre 5 peut être soumise à un débit d'air de nettoyage très important.

En configuration de nettoyage, l'air de nettoyage peut être injecté par toutes les entrées 49, 70 et 82 en même temps, ou par seulement certaines des entrées 49, 70 et 82, ou encore de façon séquentielle, c'est-à-dire en modifiant au cours du temps le jeu d'entrées 49, 70 et 82 alimentées en air de nettoyage. Par exemple, lorsque l'on introduit de l'air de nettoyage par les buses 70 après une phase d'introduction d'air de nettoyage par les entrées 49, l'air de nettoyage crée un nouveau flux d'air turbulent pour compléter le nettoyage de la chambre d'alimentation 5. Quoi qu'il en soit, cet air de nettoyage est aspiré par le système d'aspiration 79 via l'ouverture 60.

De préférence, une unique source d'air comprimé, regroupant les sources 23 et 55, alimente de l'air en différentes parties du système de poudrage de façon sélective et automatique. Cette unique source d'air comprimé alimente par exemple tout ou partie des éléments suivantes : la vanne 32, les vannes 47, les entrées de nettoyage 49, 70 et 82, les pompes 51, la chambre 21 et l'actionneur 69. Par exemple, l'unique source d'air comprimé comprend un générateur d'air comprimé et un réseau de conduites d'air comprimé connecté au générateur et aux différentes parties du système de poudrage, afin d'alimenter sélectivement ces parties du système de poudrage avec l'air comprimé ainsi généré. Pour sélectionner les parties à alimenter du système de poudrage, le réseau de conduites comprend un jeu de distributeurs d'air et de pompes, ainsi qu'un automate commandant le jeu de distributeurs et de pompes.

En variante, on a vu que des sources distinctes d'air comprimé peuvent alimenter les différentes parties du système de poudrage. Dans ce cas, chaque source d'air peut alimenter par exemple un groupe de parties du système de poudrage, par exemple un groupe constitué de toutes les entrées 49, ou un groupe constitué de toutes les entrées 49, 70 et 82. En particulier, si l'air de nettoyage doit présenter une composition différente de celle de l'air comprimé alimentant les autres parties, notamment pour la fluidisation de la poudre ou l'alimentation des pompes 51, on peut par exemple distinguer une source d'air de nettoyage et une ou plusieurs sources d'air destiné aux autres fonctions du système de poudrage. Dans cette variante, chaque source d'air comprend par exemple un générateur d'air, de nettoyage et un réseau de conduites d'air comprimé connecté au générateur et aux différentes entrées d'air concernées du système de poudrage, via leur connecteur respectif. Pour sélectionner la ou les entrées d'air à alimenter, le réseau de conduites comprend un jeu de distributeurs d'air et de pompes, ainsi qu'un automate commandant le jeu de distributeurs et de pompes.

Le système de poudrage susmentionné est configuré pour la mise en oeuvre d'une méthode de nettoyage, lorsque le système de nettoyage est en configuration de nettoyage. Dans cette méthode de nettoyage, le nettoyage est effectué selon un programme automatique, où les entrées 49, 70 et/ou 82 sont alimentées de façon prédéterminée, et éventuellement variable dans le temps. Par exemple, on peut prévoir d'alimenter tour à tour les entrées 49 des projecteurs 3 connectés à la paroi 11, puis les entrées 49 des projecteurs 3 connectés à la paroi 13, et vice versa. Par exemple, on peut prévoir d'alimenter tour à tour chaque entrée 49, ou des groupes d'entrées 49, de façon séquentielle, selon un ordre prédéterminé. Ainsi, les écoulements d'air de nettoyage générés dans la chambre 5 peuvent être modulés et modifiés au cours durant le nettoyage, voire être rendus plus turbulents par changement rapide du jeu d'entrées 49, 70 et/ou 82 admettant de l'air de nettoyage. Le nettoyage est donc amélioré.

En variante non illustrée, tout ou partie des buses de nettoyage 70 sont fixes par rapport à la paroi 7. Pour cela, ces buses fixes sont attachées à une partie fixe du réservoir 1, à l'ouverture 60, c'est-à-dire à proximité ou au travers de cette ouverture. Par exemple chaque buse fixe est attachée au conduit 67, à la paroi 7 ou au bord de l'ouverture 60. De préférence, les buses fixes sont placées à l'extérieur de la chambre 5, de façon à souffler l'air de nettoyage depuis l'extérieur de la chambre 5 vers l'intérieur de la chambre 5, lorsque la bonde 61 est en position d'ouverture. Dans ce cas également, lorsque la bonde 61 est en position d'obturation, la bonde 61 est avantageusement interposée entre les buses fixes et l'intérieur de la chambre 5.

Toute caractéristique d'un mode de réalisation ou d'une variante définis dans ce qui précède peut être mise en oeuvre pour les autres modes de réalisation et variantes définis dans ce qui précède.

## Revendications

1. Système de poudrage, présentant une configuration de travail et une configuration de nettoyage et comprenant :
- un réservoir de poudre (1), comprenant une chambre d'alimentation (5) recevant de la poudre et comprenant une ouverture d'évacuation (60), ménagée au travers d'une paroi (7) de la chambre d'alimentation (5) et débouchant dans la chambre d'alimentation (5), la paroi (7) étant de préférence une paroi verticale du réservoir de poudre (1) ;
- au moins un projecteur (3), comprenant :
∘ un applicateur de poudre (41), et
∘ une ligne d'alimentation (43), reliant l'applicateur de poudre (41) à une sortie d'alimentation (45) respective de la chambre d'alimentation (5), de sorte que, en configuration de travail, l'applicateur de poudre (41) est alimenté avec de la poudre contenue dans la chambre d'alimentation (5) par l'intermédiaire de la ligne d'alimentation (43) ; et
- au moins une entrée de nettoyage (49, 70, 82), fluidiquement connectée à la chambre d'alimentation (5) de sorte que, en configuration de nettoyage, une source d'alimentation (55) en air de nettoyage (F55) peut être connectée à l'entrée de nettoyage (49, 70, 82) pour mettre en circulation de l'air de nettoyage (F55) dans la chambre d'alimentation (5) ;
**caractérisé en ce que** le réservoir de poudre (1) comprend une bonde mobile (61), qui est mobile entre :
- une position d'obturation de l'ouverture d'évacuation (60), adoptée en configuration de travail, et
- une position d'ouverture de l'ouverture d'évacuation (60), adoptée en configuration de nettoyage de sorte que la mise en circulation d'air de nettoyage (F55) dans la chambre d'alimentation (5) par l'entrée de nettoyage (49, 70, 82) entraîne une évacuation de poudre résiduelle contenue dans la chambre d'alimentation (5) au travers de l'ouverture d'évacuation (60), vers l'extérieur de la chambre d'alimentation (5).

2. Système de poudrage selon la revendication 1, dans lequel :
- l'ouverture d'évacuation (60) définit une section de passage (S60) d'air de nettoyage (F55) ;
- chaque entrée de nettoyage (49, 70, 82) définit une section de passage d'air de nettoyage ; et
- l'aire de la section de passage (S60) de l'ouverture d'évacuation (60) est supérieure, de préférence au moins deux fois supérieure, à la somme des aires des sections de passage des entrées de nettoyage (49, 70, 82).

3. Système de poudrage selon l'une quelconque des revendications précédentes, dans lequel ladite au moins une entrée de nettoyage (49, 70, 82) comprend au moins une buse de nettoyage fixe, disposée à l'ouverture d'évacuation (60) en étant fixe par rapport à la paroi (7), ladite au moins une buse de nettoyage fixe étant conçue pour souffler de l'air de nettoyage en provenance de la source d'alimentation (55) depuis l'extérieur de la chambre d'alimentation (5), en direction de l'intérieur de la chambre d'alimentation (5), au travers de l'ouverture d'évacuation (60).

4. Système de poudrage selon l'une quelconque des revendications précédentes, dans lequel ladite au moins une entrée de nettoyage (49, 70, 82) comprend au moins une buse de nettoyage mobile (70), attachée à la bonde mobile (61) de façon à être solidairement mobile avec ladite bonde mobile (61), ladite au moins une buse de nettoyage mobile (70) étant conçue pour souffler de l'air de nettoyage en direction de l'intérieur de la chambre d'alimentation (5), au travers de l'ouverture d'évacuation (60).

5. Système de poudrage selon la revendication 4, dans lequel :
- de la position d'obturation à la position d'ouverture, la bonde mobile est déplacée vers l'intérieur de la chambre d'alimentation (5) ; et
- dans la position d'obturation, la bonde mobile (61) est interposée entre chaque buse de nettoyage mobile (70) et l'intérieur de la chambre d'alimentation (5).

6. Système de poudrage selon l'une quelconque des revendications 4 ou 5, dans lequel, en position d'ouverture de la bonde mobile (61), chaque buse de nettoyage mobile (70) est au moins partiellement positionnée à l'intérieur de la chambre d'alimentation (5).

7. Système de poudrage selon l'une quelconque des revendications précédentes, comprenant en outre un système d'aspiration (79) auquel l'ouverture d'évacuation (60) est fluidiquement connectée, pour ainsi évacuer de la poudre résiduelle contenue dans la chambre d'alimentation (5) vers le système d'aspiration (79), au travers de l'ouverture d'évacuation (60), lorsque, en configuration de nettoyage, de l'air de nettoyage (F55) est mis en circulation dans la chambre d'alimentation (5) par ladite au moins une entrée de nettoyage (49, 70, 82).

8. Système de poudrage selon l'une quelconque des revendications précédentes, dans lequel le réservoir de poudre (1) comprend un actionneur automatique (69), positionnant automatiquement la bonde mobile (61) en position d'obturation, lorsque le système de poudrage est en configuration de travail, et en position d'ouverture, lorsque le système de poudrage est en configuration de nettoyage.

9. Système de poudrage selon l'une quelconque des revendications précédentes, dans lequel le réservoir de poudre (1) comprend :
- une plaque de fluidisation (19), délimitant la chambre d'alimentation (5), la plaque de fluidisation (19) émettant, en configuration de travail, de l'air de fluidisation de la poudre contenue dans la chambre d'alimentation ; et
- au moins une sortie d'air fluidisé (80) ménagée au travers de la paroi (7), qui est configurée pour l'évacuation d'air de fluidisation en configuration de travail, au moins l'une des entrées de nettoyage (82) équipant ladite au moins une sortie d'air fluidisé (80) pour, en configuration de nettoyage, mettre en circulation de l'air de nettoyage vers la chambre d'alimentation (5) par l'intermédiaire de ladite au moins une sortie d'air fluidisé (80).

10. Système de poudrage selon la revendication 9, dans lequel le réservoir de poudre (1) comprend :
- une paroi supérieure (15), la chambre d'alimentation (5) étant délimitée par la paroi supérieure (15) et par la plaque de fluidisation (19) ;
- au moins une paroi latérale (11, 13), reliant la paroi supérieure (15) à la plaque de fluidisation (19) et portant la sortie d'alimentation (45) dudit au moins un projecteur (3), la sortie d'alimentation (45) étant agencée plus proche de la plaque de fluidisation (19) que de la paroi supérieure (15), la sortie d'alimentation (45) étant préférentiellement située à une distance inférieure à 50 mm, par exemple inférieure à 25 mm, de la plaque de fluidisation (19), la sortie d'alimentation (45) définissant un orifice de sortie traversant la paroi latérale (11, 13), chaque orifice de sortie définissant un axe d'orifice (X45) incliné par rapport à la plaque de fluidisation (19), d'un angle (α45) compris entre 30° et 60°, de préférence entre 45° et 55°.

11. Système de poudrage selon la revendication 10, dans lequel :
- ladite au moins une paroi latérale comprend une première paroi latérale (11) et une deuxième paroi latérale (13) opposées, délimitant entre elles la chambre d'alimentation (5) ; et
- une pluralité de projecteurs (3) est prévue, de sorte que, pour chaque projecteur (3), la ligne d'alimentation (43) du projecteur (3) concerné relie l'applicateur de poudre (41) de ce projecteur (3) à une sortie d'alimentation (45) respective de la chambre d'alimentation (5), une première partie des sorties d'alimentation (45) étant prévue au travers de la première paroi latérale (11), une deuxième partie des sorties d'alimentation (45) étant prévue au travers de la deuxième paroi latérale (13).

12. Système de poudrage selon l'une quelconque des revendications précédentes, dans lequel :
- la chambre d'alimentation (5) comprend au moins une entrée d'admission (29) de poudre dans la chambre d'alimentation (5) ; et
- ladite au moins une entrée de nettoyage (49, 70, 82) comprend une entrée de nettoyage de ligne (49) appartenant à la ligne d'alimentation (43) dudit au moins un projecteur (3), l'entrée de nettoyage de ligne (49) étant disposée entre l'applicateur de poudre (41) et la sortie d'alimentation (45), de sorte que, en configuration de nettoyage, pour chaque projecteur (3), la source (55) d'air de nettoyage (F55) peut être connectée à l'entrée de nettoyage de ligne (49) pour mettre en circulation de l'air de nettoyage (F55) vers l'applicateur de poudre (41) et vers la chambre d'alimentation (5), via la ligne d'alimentation (43).

13. Système de poudrage selon la revendication 12, dans lequel l'entrée de nettoyage de ligne (49) comprend un filtre par l'intermédiaire duquel l'air de nettoyage est injecté dans la ligne d'alimentation (43), le filtre présentant une porosité inférieure à la granulométrie de la poudre, de préférence une porosité inférieure à 50 µm, par exemple inférieure à 30 µm.

14. Système de poudrage selon l'une quelconque des revendications 12 ou 13, dans lequel, pour chaque projecteur (3), la ligne d'alimentation (43) comprend une vanne (47), disposée entre la sortie d'alimentation (45) et l'entrée de nettoyage de ligne (49), la vanne (47) évoluant entre :
- une configuration ouverte, dans laquelle la vanne (47) autorise la circulation de l'air de nettoyage provenant de l'entrée de nettoyage de ligne (49) vers la chambre d'alimentation (5) et vers l'applicateur de poudre (41) et
- une configuration fermée, dans laquelle la vanne (47) interdit la circulation de l'air de nettoyage provenant de l'entrée de nettoyage de ligne (49) vers la chambre d'alimentation (5), tout en autorisant la circulation d'air de nettoyage provenant de l'entrée de nettoyage de ligne (49) vers l'applicateur de poudre (41) via la ligne d'alimentation (43).

15. Système de poudrage selon l'une quelconque des revendications 12 à 14, dans lequel, pour chaque projecteur (3) :
- la ligne d'alimentation (43) comprend une pompe (51), disposée entre l'applicateur de poudre (41) et l'entrée de nettoyage de ligne (49), et
- la pompe (51), en configuration de travail du système de poudrage, met en circulation de la poudre contenue dans la chambre d'alimentation (5) jusqu'à l'applicateur de poudre (41), par l'intermédiaire de la ligne d'alimentation (43).

## Patentansprüche

1. Pulverbeschichtungssystem, das eine Arbeitskonfiguration und eine Reinigungskonfiguration aufweist und umfasst:
- einen Pulverbehälter (1), der eine Zuführkammer (5) umfasst, die Pulver aufnimmt, und eine Auslassöffnung (60) umfasst, die durch eine Wand (7) der Zuführkammer (5) verläuft und in die Zuführkammer (5) mündet, wobei die Wand (7) vorzugsweise eine vertikale Wand des Pulverbehälters (1) ist;
- mindestens einen Zerstäuber (3), der umfasst:
○ einen Pulverapplikator (41) und
○ eine Zuführleitung (43), die den Pulverapplikator (41) mit einem jeweiligen Zuführauslass (45) der Zuführkammer (5) verbindet, so dass in der Arbeitskonfiguration der Pulverapplikator (41) über die Zuführleitung (43) mit Pulver versorgt wird, das in der Zuführkammer (5) enthalten ist; und
- mindestens einen Reinigungseinlass (49, 70, 82), der mit der Zuführkammer (5) fluidisch verbunden ist, so dass in der Reinigungskonfiguration eine Zuführquelle (55) für Reinigungsluft (F55) mit dem Reinigungseinlass (49, 70, 82) verbunden werden kann, um Reinigungsluft (F55) in der Zuführkammer (5) in Zirkulation zu versetzen;
**dadurch gekennzeichnet, dass** der Pulverbehälter (1) einen beweglichen Spund (61) umfasst, der beweglich ist zwischen:
- einer Verschlussposition der Auslassöffnung (60), die in der Arbeitskonfiguration eingenommen wird, und
- einer Öffnungsposition der Auslassöffnung (60), die in der Reinigungskonfiguration eingenommen wird, so dass das Inzirkulationversetzen von Reinigungsluft (F55) in der Zuführkammer (5) durch den Reinigungseinlass (49, 70, 82) zum Auslass von in der Zuführkammer (5) enthaltenem Restpulver durch die Auslassöffnung (60) nach außerhalb der Zuführkammer (5) führt.

2. Pulverbeschichtungssystem nach Anspruch 1, wobei:
- die Auslassöffnung (60) einen Durchlassquerschnitt (S60) für Reinigungsluft (F55) definiert;
- jeder Reinigungseinlass (49, 70, 82) einen Reinigungsluft-Durchlassquerschnitt definiert; und
- die Fläche des Durchlassquerschnitts (S60) der Auslassöffnung (60) größer als, vorzugsweise mindestens doppelt so groß wie die Summe der Flächen der Durchlassquerschnitte der Reinigungseinlässe (49, 70, 82) ist.

3. Pulverbeschichtungssystem nach einem der vorhergehenden Ansprüche, wobei der mindestens eine Reinigungseinlass (49, 70, 82) mindestens eine feststehende Reinigungsdüse umfasst, die an der Auslassöffnung (60) angeordnet ist, indem sie in Bezug auf die Wand (7) feststehend ist, wobei die mindestens eine feststehende Reinigungsdüse dazu ausgelegt ist, Reinigungsluft von der Zuführquelle (55) von außerhalb der Zuführkammer (5) durch die Auslassöffnung (60) in Richtung des Inneren der Zuführkammer (5) zu blasen.

4. Pulverbeschichtungssystem nach einem der vorhergehenden Ansprüche, wobei der mindestens eine Reinigungseinlass (49, 70, 82) mindestens eine bewegliche Reinigungsdüse (70) umfasst, die derart an dem beweglichen Spund (61) angebracht ist, dass sie mit dem beweglichen Spund (61) gemeinsam beweglich ist, wobei die mindestens eine bewegliche Reinigungsdüse (70) dazu ausgelegt ist, Reinigungsluft durch die Auslassöffnung (60) in Richtung des Inneren der Zuführkammer (5) zu blasen.

5. Pulverbeschichtungssystem nach Anspruch 4, wobei:
- der bewegliche Spund von der Verschlussposition in die Öffnungsposition in das Innere der Zuführkammer (5) bewegt wird; und
- in der Verschlussposition der bewegliche Spund (61) zwischen jeder beweglichen Reinigungsdüse (70) und dem Inneren der Zuführkammer (5) angeordnet ist.

6. Pulverbeschichtungssystem nach einem der Ansprüche 4 oder 5, wobei in der Öffnungsposition des beweglichen Spunds (61) jede bewegliche Reinigungsdüse (70) zumindest teilweise im Inneren der Zuführkammer (5) positioniert ist.

7. Pulverbeschichtungssystem nach einem der vorhergehenden Ansprüche, ferner umfassend ein Saugsystem (79), mit dem die Auslassöffnung (60) fluidisch verbunden ist, um dadurch in der Zuführkammer (5) enthaltenes Restpulver durch die Auslassöffnung (60) zum Saugsystem (79) auszulassen, wenn in der Reinigungskonfiguration Reinigungsluft (R55) in der Zuführkammer (5) durch den mindestens einen Reinigungseinlass (49, 70, 82) in Zirkulation versetzt wird.

8. Pulverbeschichtungssystem nach einem der vorhergehenden Ansprüche, wobei der Pulverbehälter (1) einen automatischen Aktuator (69) umfasst, der den beweglichen Spund (61) automatisch in der Verschlussposition positioniert, wenn sich das Pulverbeschichtungssystem in der Arbeitskonfiguration befindet, und in der Öffnungsposition, wenn sich das Pulverbeschichtungssystem in der Reinigungskonfiguration befindet.

9. Pulverbeschichtungssystem nach einem der vorherigen Ansprüche, wobei der Pulverbehälter (1) umfasst:
- eine Fluidisierungsplatte (19), die die Zuführkammer (5) begrenzt, wobei die Fluidisierungsplatte (19) in der Arbeitskonfiguration Luft zum Fluidisieren des in der Zuführkammer enthaltenen Pulvers ausstößt; und
- mindestens einen durch die Wand (7) verlaufenden Auslass fludisierter Luft (80), der zum Auslassen fludisierter Luft in der Arbeitskonfiguration ausgelegt ist, wobei mindestens einer der Reinigungseinlässe (82) den mindestens einen Auslass fluidiserter Luft (80) ausstattet, um in der Reinigungskonfiguration Reinigungsluft über den mindestens einen Auslass fluidisierter Luft (80) zur Zuführkammer (5) in Zirkulation zu versetzen.

10. Pulverbeschichtungssystem nach Anspruch 9, wobei der Pulverbehälter (1) umfasst:
- eine obere Wand (15), wobei die Zuführkammer (5) durch die obere Wand (15) und die Fluidisierungsplatte (19) begrenzt ist;
- mindestens eine Seitenwand (11, 13), die die obere Wand (15) mit der Fluidisierungsplatte (19) verbindet und den Zuführauslass (45) des mindestens einen Zerstäubers (3) trägt, wobei der Zuführauslass (45) näher an der Fluidisierungsplatte (19) als die obere Wand (15) angeordnet ist, wobei sich der Zuführauslass (45) vorzugsweise in einem Abstand von weniger als 50 mm, beispielsweise weniger als 25 mm, von der Fluidisierungsplatte (19) entfernt befindet, wobei der Zuführauslass (45) eine Auslassöffnung definiert, die durch die Seitenwand (11, 13) hindurchgeht, wobei jede Auslassöffnung eine Öffnungsachse (X45) definiert, die in Bezug auf die Fluidisierungsplatte (19) in einem Winkel (α45) zwischen 30° und 60°, vorzugsweise zwischen 45° und 55°, geneigt ist.

11. Pulverbeschichtungssystem nach Anspruch 10, wobei:
- die mindestens eine Seitenwand eine erste Seitenwand (11) und eine zweite Seitenwand (13) umfasst, die einander gegenüberliegen und zwischen sich die Zuführkammer (5) begrenzen; und
- eine Vielzahl von Zerstäubern (3) vorgesehen ist, so dass für jeden Zerstäuber (3) die Zuführleitung (43) des betreffenden Zerstäubers (3) den Pulverapplikator (41) dieses Zerstäubers (3) mit einem entsprechenden Zuführauslass (45) der Zuführkammer (5) verbindet, wobei ein erster Teil der Zuführauslasse (45) durch die erste Seitenwand (11) vorgesehen ist, wobei ein zweiter Teil der Zuführausgänge (45) durch die zweite Seitenwand (13) vorgesehen ist.

12. Pulverbeschichtungssystem nach einem der vorherigen Ansprüche, wobei:
- die Zuführkammer (5) mindestens einen Zugangseinlass (29) von Pulver in die Zuführkammer (5) umfasst; und
- der mindestens eine Reinigungseinlass (49, 70, 82) einen Leitungsreinigungseinlass (49) umfasst, der zu der Zuführleitung (43) des mindestens einen Zerstäubers (3) gehört, wobei der Leitungsreinigungseinlass (49) zwischen dem Pulverapplikator (41) und dem Zuführauslass (45) angeordnet ist, so dass in der Reinigungskonfiguration für jeden Zerstäuber (3) die Quelle (55) für Reinigungsluft (F55) mit dem Leitungsreinigungseinlass (49) verbindbar ist, um Reinigungsluft (F55) über die Zuführleitung (43) zum Pulverapplikator (41) und zur Zuführkammer (5) in Zirkulation zu versetzen.

13. Pulverbeschichtungssystem nach Anspruch 12, wobei der Leitungsreinigungseinlass (49) einen Filter umfasst, über den die Reinigungsluft in die Zuführleitung (43) eingeleitet wird, wobei der Filter eine Porosität aufweist, die kleiner ist als die Korngröße des Pulvers ist, vorzugsweise eine Porosität von weniger als 50 µm, z. B. weniger als 30 µm.

14. Pulverbeschichtungssystem nach einem der Ansprüche 12 oder 13, wobei für jeden Zerstäuber (3) die Zuführleitung (43) ein Ventil (47) umfasst, das zwischen dem Zuführauslass (45) und dem Leitungsreinigungseinlass (49) angeordnet ist, wobei sich das Ventil (47) bewegt zwischen:
- einer offenen Konfiguration, in der das Ventil (47) die Zirkulation von Reinigungsluft vom Leitungsreinigungseinlass (49) zur Zuführkammer (5) und zum Pulverapplikator (41) gestattet, und
- einer geschlossenen Konfiguration, in der das Ventil (47) die Zirkulation von Reinigungsluft vom Leitungsreinigungseinlass (49) zur Zuführkammer (5) unterbindet, während es die Zirkulation von Reinigungsluft vom Leitungsreinigungseinlass (49) zum Pulverapplikator (41) über die Zuführleitung (43) zulässt.

15. Pulverbeschichtungssystem nach einem der Ansprüche 12 bis 14, wobei für jeden Zerstäuber (3):
- die Zuführleitung (43) eine Pumpe (51) umfasst, die zwischen dem Pulverapplikator (41) und dem Leitungsreinigungseinlass (49) angeordnet ist, und
- die Pumpe (51) in der Arbeitskonfiguration des Pulverbeschichtungssystems das in der Zuführkammer (5) enthaltene Pulver über die Zuführleitung (43) zum Pulverapplikator (41) in Zirkulation versetzt.

## Claims

1. A powdering system, having a working configuration and a cleaning configuration and comprising:
- a powder reservoir (1), comprising a supply chamber (5) receiving powder and comprising a discharge opening (60), arranged through a wall (7) of the supply chamber (5) and opening into the supply chamber (5), wherein the wall (7) is preferably a vertical wall of the powder reservoir (1);
- at least one sprayer (3), comprising:
∘ a powder applicator (41), and
∘ a supply line (43), connecting the powder applicator (41) to a respective supply outlet (45) of the supply chamber (5), such that, in the working configuration, the powder applicator (41) is supplied with powder contained in the supply chamber (5) by means of the supply line (43); and
- at least one cleaning inlet (49, 70, 82), fluidly connected to the supply chamber (5) such that, in the cleaning configuration, a cleaning air (F55) supply source (55) can be connected to the cleaning inlet (49, 70, 82) so as to circulate cleaning air (F55) in the supply chamber (5);
**characterized in that** the powder reservoir (1) comprises a movable plug (61), which is movable between:
- a closing position of the discharge opening (60), adopted in the working configuration, and
- an open position of the discharge opening (60), adopted in the cleaning configuration such that the circulation of cleaning air (F55) in the supply chamber (5) through the cleaning inlet (49, 70, 82) causes a discharge of residual powder contained in the supply chamber (5) through the discharge opening (60), to the outside of the supply chamber (5).

2. The powdering system according to claim 1, wherein:
- the discharge opening (60) defines a cleaning air (F55) passage section (S60);
- each cleaning inlet (49, 70, 82) defines a cleaning air passage section; and
- the area of the passage section (S60) of the discharge opening (60) is greater, preferably at least two times greater, than the sum of the areas of the passage sections of the cleaning inlets (49, 70, 82).

3. The powdering system according to any one of the preceding claims, wherein said at least one cleaning inlet (49, 70, 82) comprises at least one stationary cleaning nozzle, arranged at the discharge opening (60) while being stationary relative to the wall (7), said at least one stationary cleaning nozzle being designed to blow cleaning air coming from the supply source (55) from the outside of the supply chamber (5), toward the inside of the supply chamber (5), through the discharge opening (60).

4. The powdering system according to any one of the preceding claims, wherein said at least one cleaning inlet (49, 70, 82) comprises at least one movable cleaning nozzle (70), attached to the movable plug (61) so as to be securely movable with said movable plug (61), said at least one movable cleaning nozzle (70) being designed to blow cleaning air toward the inside of the supply chamber (5), through the discharge opening (60).

5. The powdering system according to claim 4, wherein:
- from the closing position to the open position, the movable plug is moved toward the inside of the supply chamber (5); and
- in the closing position, the movable plug (61) is inserted between each movable cleaning nozzle (70) and the inside of the supply chamber (5).

6. The powdering system according to any one of claims 4 or 5, wherein, in the open position of the movable plug (61), each movable cleaning nozzle (70) is at least partially positioned inside the supply chamber (5).

7. The powdering system according to any one of the preceding claims, further comprising a suction system (79) to which the discharge opening (60) is fluidly connected, to thus discharge residual powder contained in the supply chamber (5) toward the suction system (79), through the discharge opening (60), when, in the cleaning configuration, cleaning air (F55) is circulated in the supply chamber (5) through said at least one cleaning inlet (49, 70, 82).

8. The powdering system according to any one of the preceding claims, wherein the powder reservoir (1) comprises an automatic actuator (69), automatically positioning the movable plug (61) in the closing position, when the powdering system is in the working configuration, and in the open position, when the powdering system is in the cleaning configuration.

9. The powdering system according to any one of the preceding claims, wherein the powder reservoir (1) comprises:
- a fluidization plate (19), delimiting the supply chamber (5), the fluidization plate (19) emitting, in the working configuration, fluidization air of the powder contained in the supply chamber; and
- at least one fluidized air outlet (80) arranged through the wall (7), which is configured to discharge fluidization air in the working configuration, at least one of the cleaning inlets (82) equipping said at least one fluidized air outlet (80) in order, in the cleaning configuration, to circulate cleaning air toward the supply chamber (5) through said at least one fluidized air outlet (80).

10. The powdering system according to claim 9, wherein the powder reservoir (1) comprises:
- an upper wall (15), the supply chamber (5) being delimited by the upper wall (15) and by the fluidization plate (19); and
- at least one side wall (11, 13), connecting the upper wall (15) to the fluidization plate (19) and bearing the supply outlet (45) of said at least one sprayer (3), the supply outlet (45) being arranged closer to the fluidization plate (19) than the upper wall (15), wherein the outlet (45) is preferably located at a distance smaller than 50 mm, for example smaller than 25 mm, from the fluidization plate (19), wherein the supply outlet (45) defines an outlet orifice passing through the side wall (11, 13), each outlet orifice defining an orifice axis (X45) that is inclined relative to the fluidization plate (19), by an angle (α45) of between 30° and 60°, preferably between 45° and 55°.

11. The powdering system according to claim 10, wherein:
- said at least one side wall comprises a first side wall (11) and a second side wall (13) that are opposite one another, delimiting the supply chamber (5) between them; and
- a plurality of sprayers (3) is provided, such that, for each sprayer (3), the supply line (43) of the concerned sprayer (3) connects the powder applicator (41) of this sprayer (3) to a respective supply outlet (45) of the supply chamber (5), a first portion of the supply outlets (45) being provided through the first side wall (11), a second portion of the supply outlets (45) being provided through the second side wall (13).

12. The powdering system according to any one of the preceding claims, wherein:
- the supply chamber (5) comprises at least one inlet (29) for allowing powder into the supply chamber (5); and
- said at least one cleaning inlet (49, 70, 82) comprises a line cleaning inlet (49) belonging to the supply line (43) of said at least one sprayer (3), the line cleaning inlet (49) being arranged between the powder applicator (41) and the supply outlet (45), such that, in the cleaning configuration, for each sprayer (3), the cleaning air (F55) source (55) can be connected to the line cleaning inlet (49) to circulate cleaning air (F55) towards the powder applicator (41) and towards the supply chamber (5), via the supply line (43).

13. The powdering system according to claim 12, wherein the line cleaning inlet (49) comprises a filter by means of which the cleaning air is injected into the supply line (43), the filter having a pore size smaller than the particle size of the powder, preferably a pore size smaller than 50 µm, for example smaller than 30 µm.

14. The powdering system according to any one of claims 12 or 13, wherein, for each sprayer (3), the supply line (43) comprises a valve (47), arranged between the supply outlet (45) and the line cleaning inlet (49), the valve (47) moving between:
- an open configuration, in which the valve (47) allows the circulation of cleaning air coming from the line cleaning inlet (49) toward the supply chamber (5) and toward the powder applicator (41), and
- a closed configuration, in which the valve (47) prohibits the circulation of cleaning air coming from the line cleaning inlet (49) toward the supply chamber (5), while allowing the circulation of cleaning air coming from the line cleaning inlet (49) toward the powder applicator (41) via the supply line (43).

15. The powdering system according to any one of claims 12 to 14, wherein, for each sprayer (3):
- the supply line (43) comprises a pump (51), arranged between the powder applicator (41) and the line cleaning inlet (49), and
- the pump (51), in the working configuration of the powdering system, circulates powder contained in the supply chamber (5) up to the powder applicator (41), by means of the supply line (43).
